# EUROPEAN PATENT APPLICATION

(11) **EP 1 724 242 A1**
(43) Date of publication of application: **22.11.2006**
(21) Application number: 05425340.6
(22) Date of filing: 18.05.2005
(51) Int. Cl.: C03B 19/08, C03B 19/10, C04B 14/24

(54) **Process for making expanded glass products, and the products obtained by means of said process**

(71) Applicant: I.C.R.S. Industrial Ceramic Reinforcement Solution S.r.L., 20122 Milano (IT)
(72) Inventor: Giuliani Giacinto, 16035 Rapallo (Genova) (IT)
(74) Representative: Lunati, Vittoriano

(57) **Abstract**

This is a process for manufacturing expanded glass products (1), comprising a phase (10) for the preparation of a mass of molten glass (1a) in an environment (2) at a temperature higher than the liquid temperature of the glass, said phase including the formation of tiny bubbles of gas inside the mass of molten glass (1a), followed by a phase (11) for reducing the pressure in the environment (2) and thus induce the expansion of the bubbles to achieve a mass of expanded glass (1b), and a phase (12) for cooling the environment (2) so that the mass of expanded glass (1 b) solidifies.

## Description

The present invention relates to a process for making expanded glass products, and the products obtained by means of said process, of the type described in the preamble of the first claim.

It is now common knowledge that expanded glass, also called "cellular glass" or "foam glass", is used in various sectors, such as in the building industry and the like.

The fundamental features of this compound are a very low thermal and acoustic conductivity, a low density, a remarkable compressive strength, the low cost of the raw materials, the opportunity to use recycled raw materials, and more besides.

Thanks to these particular characteristics, expanded glass has been used in various applications in the building industry, including insulation walls and roofing for residential buildings, and so on, underground perimeter walls, swimming pools, walls for EDP centres or printed matter archives, ovens for baking foodstuffs, open-air and underground freezing system tanks and piping, wind tunnels, bunkers, etc.

Another use for expanded glass is in the form of granules as an aggregate for adding to concrete mixtures, in which case, it reduces the density of the concrete and increases its thermal and acoustic insulation coefficient.

Expanded glass is normally made by using foaming agents that are added to the glass in its molten state: these foaming agents react chemically with the components in the glass while it is still fluid, according to dynamics better explained below.

It is common knowledge that the term glass is used to describe an amorphous, non-crystalline, homogeneous and transparent solid obtained by melting and subsequently solidifying various materials including the fundamental components, which are silica, sodium carbonate and calcium carbonate.

Silica, the fundamental component of glass, melts at 1700°C, but thanks to the addition of other components, the liquid temperature of the vitreous compound (above which said compound is in the form of a fluid containing solid particles in solution or in suspension) can be brought down to approximately 1300°C.

Various chemical reactions take place between the components when the vitreous compound is in the fluid state.

One of these reactions involves the carbonates (mainly sodium and calcium carbonates), and the sulfates are decomposed, giving rise to carbon or sulfur oxides or dioxides.

These latter compounds are gaseous and consequently create bubbles inside the vitreous compound.

The presence of bubbles in glass is sometimes considered a defect in the material, but it can be exploited to make expanded glass.

The quantity of bubbles forming inside the vitreous compound as a result of the above-described process is insufficient to create expanded glass with the required characteristics, however, so expanding agents are added to the molten glass mass.

These expanding agents trigger chemical reactions suitable for developing sufficient quantities of gaseous bubbles inside the vitreous compound.

The most common foaming agents are composed of carbon powder and sulfates, which respectively act as a reducing agent and an oxidizing agent, that together lead to the formation of carbon dioxide bubbles in the vitreous compound.

The chemical reaction between the foaming agents and the mass of molten glass are achieved at high temperatures over a certain time interval, which varies according to the quantity of molten glass involved in the reaction.

The above-mentioned known technique has a few important drawbacks, however.

In fact, because the foaming agents are foreign to the chemical composition of normal glass, they become impurities in the material.

Said impurities may weaken the expanded glass products or have other undesirable effects.

Some expanding agents discolour the vitreous material, as in the case of carbon, which is used in the form of graphite, so the vitreous material has to be painted if it is to be used on any surface in view in building applications.

Moreover, some foaming agents give the expanded glass an unpleasant smell, as in the case of the commonly-used sulfates.

A further drawback of this process is that it involves using furnaces at high temperatures and for considerable periods of time, which means a more limited productivity and an increase in the energy expenditure to keep the furnace at the required temperature.

Given this situation, the technical goal of the present intervention is to design a process for making expanded glass products that is capable of substantially overcoming the above-mentioned drawbacks.

In the context of said technical goal, an important object of the present invention is to develop a process for manufacturing expanded glass products that does not need to use expanding agents foreign to the composition of the vitreous material.

Another important object of the invention is to develop a process for manufacturing expanded glass products that is rapid to complete and does not demand the use of furnaces or other such equipment for any lengthy period of time.

The stated technical goal and objects are achieved by a process for manufacturing expanded glass products, as claimed in the attached Claim 1.

Preferred embodiments are identified in the dependent claims.

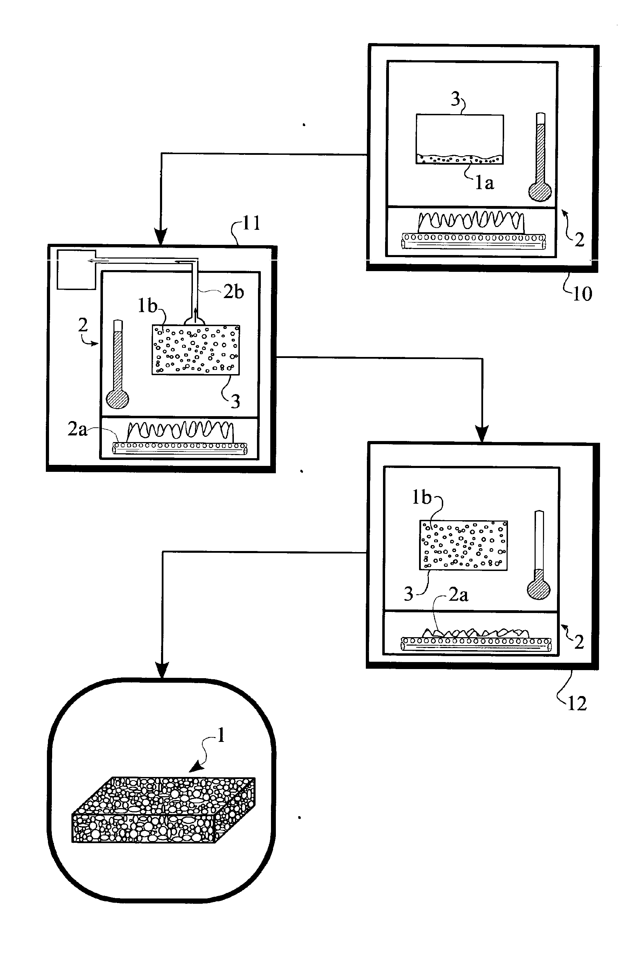

Other characteristics and advantages of the invention are further clarified below in the detailed description of a preferred embodiment of the invention, with reference to the attached drawings wherein:
**the only figure** is a block diagram that schematically illustrates the process according to this invention.

The process according to this invention is designed to manufacture expanded glass products **1.**

It comprises a phase for the preparation **10** of a mass of molten glass **1a** in an environment **2** at a temperature higher than the melting temperature of the vitreous material.

Said phase of preparation 10 includes the melting of the raw materials needed to make glass, i.e. silica, sodium carbonate, calcium carbonate and others, or preferably the reuse of recycled glass or similar materials.

Moreover, the preferred types of glass are alkali-resistant glass (AR) and electric glass (E).

The letter "E" is used to indicate a glass with excellent qualities in terms of strength, a high elastic modulus, and a high melting point. It can be defined as a calcium and aluminium borosilicate, with a low alkaline content.

The letters "AR", on the other hand, indicate a glass with the additional feature of a high content of zirconium oxide ZrO₂ and an excellent capacity to resist acid and alkaline attack, from cement in particular.

The molten glass mass 1 a also preferably includes a quantity of calcium carbonate coming between 1% and 5% w/w of the mass 1 a.

The material is melted in a suitable environment 2, in the form of a furnace. Said furnace may be of various types and preferably includes means for heating **2a,** e.g. of electric type, that can ensure the achievement of the high temperatures required.

Inside the furnace, the mass of molten glass 1a is preferably placed in a mold **3,** shaped according to the shape that the finished expanded glass product 1 made from the mass of molten glass 1 a is required to have.

The mold 3 is made using refractory materials, which may be ceramics, or austenitic steels. The latter are preferable because of their great mechanical strength.

The environment 2 is heated to the temperature needed to melt the glass, i.e. above the temperature at which the glass becomes fluid, as specified in the known technique.

Said liquid temperature varies, depending on the composition of the glass, but is generally around 1300°C, particularly in the case of type E or AR glass.

The previously-mentioned chemical reactions take place among the components of the liquid mass of glass 1a: the carbonates react with the oxides, giving rise to gaseous molecules of carbon monoxide or carbon dioxide.

Tiny bubbles of gas consequently form inside the liquid mass of glass 1 a, the internal pressure of which is substantially identical to the external pressure of the environment 2, which is normally the same as the atmospheric pressure.

Then comes a stage **11** in which the pressure in the environment 2 is reduced by means of suitable depressurizing media **2b** of known type.

During this stage, the environment 2 is rapidly brought down to a pressure below atmospheric pressure, or at least to a pressure lower than the original pressure in the environment 2.

This drop in pressure unbalances the forces inside the tiny bubbles of gas occurring in the liquid mass of glass 1 a.

In fact, the pressure in these bubbles comes to be higher than the external pressure of the environment 2 and of the mass of molten glass 1 a that surrounds them, and said higher internal pressure makes the bubbles expand very rapidly.

The expansion of the bubbles gives rise to a considerable increase in the volume of the mass of molten glass 1 a, thus creating a foaming mass of molten glass **1 b.**

Experiments and tests conducted by the applicant have demonstrated that an outside ambient pressure 0.2 bar lower triggers a 2000% volumetric expansion of the liquid mass of glass 1 a.

When the mass of molten glass 1a is placed in a mold, it is consequently advisable for said liquid mass to initially fill a volume corresponding to approximately one twentieth of the capacity of the mold 3, so that the expanded mass 1 b will fill the entire mold after said volumetric expansion.

After the pressure reducing phase 11 comes a final phase **12** for cooling the environment 2 so that the expanded mass 1 b can solidify and the expanded mass product 1 is then complete. Said cooling phase 12 preferably involves a controlled cooling process.

In this case, the cooling phase 12 takes place in special ovens that ensure controlled temperature reductions over a given time interval and substantially cool the product in the same way as in known heat treatments, so as to create a given microstructure inside the expanded glass product 1, or to avoid any residual stresses inside said product 1.

The most common heat treatments for vitreous materials are known by the name of annealing, stabilizing or seasoning.

The expanded glass product 1 obtained using the described process has a density of between 0.13 kg/dm³ and 0.25 kg/dm³, and is structurally composed of various particles of glass welded together, the diameter of which comes between 0.5 mm and 1.5 mm.

Expanded glass products can be used as insulating bricks, insulating panels and so on, and can come in various shapes and sizes, depending on the shape and size of the mold 3.

Alternatively, these products can be broken down in suitable crushers or mills to create a granular aggregate for use in concrete mixtures.

This concrete aggregate preferably comes in granular shapes with maximum dimensions below 20 mm.

In this latter case, it is advisable for the glass to be of the AR type in order to counteract the chemical aggressiveness of the cement.

The present invention offers important advantages.

Expanded glass products 1 made according to the present process are very lightweight (0.13 - 0.25 kg/dm³) and strong.

Said products 1 also have a very low thermal and acoustic conductivity. They are also chemically neutral and flame-resistant.

A further advantage of the expanded glass products 1 made using the described process consists in the fact that said products contain no foaming substances foreign to the vitreous material itself.

In fact, the substances used as expanding agents are calcium carbonate, sodium carbonate and the like - products that are commonly found in glass and that form part of the material itself.

The expanded glass products 1 made according to the present process also have at better aesthetic appearance and can be used in buildings applications that remain in view, and so on.

A further advantage derives from the fact that the present process is rapid and less expensive in energy terms than the traditional methods.

In fact, the present process involves a rapid expansion of the mass of molten glass 1 a induced by a physical process, so there is no need to wait for a certain time to allow for a chemical reaction to take place, as in the case of using foaming agents.

This enables a considerable energy-saving and a faster completion of the process.

If the material is used in the preparation of concrete mixtures, it has the advantage of being very lightweight, insulating, nontoxic and flameproof.

If it is made of type AR glass, it has the added feature of a great resistance to the alkalis occurring in cement mixtures.

A variant of the process involves the pressure-reducing phase 11 coming before the phase 10 for preparing the mass of molten glass 1a, i.e. the mass of molten glass 1a is prepared in an environment 2 at a low pressure and a high temperature, as in the case, for instance, of the environment 2 being in the form of a vacuum furnace.

## Claims

1. Process for manufacturing expanded glass products comprising a phase (10) for the preparation of a mass of molten glass (1a) in an environment (2) at a temperature higher than the liquid temperature of said glass, said preparatory phase (10) comprising the formation of tiny bubbles of gas within said mass of molten glass (1a), a cooling phase (12) for said environment (2) so that the mass of molten glass can solidify (1a), **characterized in that** it comprises a pressure reducing phase (11) in said environment prior to said cooling phase (12), such that said bubbles expand and thus give rise to a mass of expanded glass (1 b).

2. Process as in claim 1, wherein said pressure-reducing phase (11) takes place after said preparatory phase (10).

3. Process as in claim 1, wherein said pressure-reducing phase (11) takes place prior to said preparatory phase (10).

4. Process as in claim 1, including a phase for crushing said expanded glass product (1) to produce a granular aggregate for use in concrete mixtures.

5. Process as in claim 1, wherein said molten glass mass (1 a) includes a quantity of calcium carbonate coming between 1% and 5% w/w.

6. Process as in claim 1, wherein said mass of molten glass (1a) is made of selected alkali-resistant or electric glass.

7. Process as in claim 1, wherein said preparatory phase (10) includes placing said mass of molten glass (1 a) in a mold (3), and said pressure reducing phase (11) includes reducing the pressure in said mold (3).

8. Process as in claim 1, wherein said environment (2) is brought down to a pressure below 0.2 bar during said pressure reducing phase (11).

9. Process as in claim 1, wherein said environment (2) is brought up to a temperature near 1300°C during said preparatory phase (10).

10. Expanded glass product, **characterized in that** it is made by means of a process according to one or more of the previous claims.

11. Product according to claim 10, in the shape of a tile.

12. Product according to claim 10, in granular form with dimensions below 20 mm, suitable for use as an aggregate in concrete mixtures.
